(19) Europäisches Patentamt

European Patent Office

Office européen des brevets

(11) Veröffentlichungsnummer: **0 289 707 B1**

(12) **EUROPÄISCHE PATENTSCHRIFT**

(45) Veröffentlichungstag der Patentschrift: **23.09.92**

(51) Int. Cl.⁵: **H05B 3/26**

(21) Anmeldenummer: **88101677.8**

(22) Anmeldetag: **05.02.88**

(54) **Elektrisches Heizelement mit Abgriff.**

(30) Priorität: **10.02.87 DE 8701993 U**

(43) Veröffentlichungstag der Anmeldung:
**09.11.88 Patentblatt 88/45**

(45) Bekanntmachung des Hinweises auf die
Patenterteilung:
**23.09.92 Patentblatt 92/39**

(84) Benannte Vertragsstaaten:
**DE ES FR GB IT**

(56) Entgegenhaltungen:
**DE-B- 2 530 075**
**DE-C- 2 722 213**
**GB-A- 262 696**

(73) Patentinhaber: **Fritz Eichenauer GmbH & Co. KG**
**Georg-Todt-Strasse 1-3**
**W-6744 Kandel/Pfalz(DE)**

(72) Erfinder: **Nauerth, Helmut**
**Raiffeisenstrasse 43A**
**W-6749 Niederhorbach(DE)**
Erfinder: **Ohnmacht, Helmut**
**Virchowstrasse 1**
**W-6744 Kandel(DE)**
Erfinder: **Meywald, Klaus**
**Schubertstrasse**
**W-6744 Kandel(DE)**

(74) Vertreter: **Dr.-Ing. Hans Lichti Dipl.-Ing. Heiner Lichti Dipl.-Phys. Dr. Jost Lempert**
**Postfach 41 07 60 Bergwaldstrasse 1**
**W-7500 Karlsruhe 41(DE)**

EP 0 289 707 B1

**Beschreibung**

Die Erfindung betrifft einen elektrischen Heizkörper mit isolierenden Tragteilen und von diesen getragenen Heizleitern und mit mindestens einem Abgriffteil zum Abgreifen einer gegenüber der am Heizleiter anliegenden Spannung verminderten Spannung, beispielsweise für einen Lüftermotor oder dergleichen.

Die Erfindung bezieht sich dabei insbesondere auf einen Heizkörper, bei dem der Heizleiter zwischen Berührungspunkten mit den Tragteilen sich frei mit Abstand zu diesen erstreckt und das Abgriffteil innerhalb des vom Heizleiter umschlossenen Bereichs am Tragteil festgelegt ist.

Abgriffteile an derartigen Heizkörpern dienen dazu, eine gegenüber der am gesamten Heizkörper anliegenden Netzspannung reduzierte Spannung abzugreifen, beispielsweise für einen Lüftermotor oder dergleichen, der nur mit niedrigerer Spannung versorgt werden darf. Gattungsgemäße Heizkörper mit derartigen Abgriffteilen sind insbesondere aus der DE-PS 27 22 213 bekannt.

Aus vorstehendem ergibt sich, daß die genaue Abgriffstelle des Abgriffteils am Heizleiter für ein bestimmtes Funktionselement, wie einen Lüftermotor festgelegt sein muß, sich bei unterschiedlichen Lüftermotoren aber unterscheiden kann, wenn diese mit unterschiedlichen Spannungen versorgt werden sollen. Nun ergibt sich oftmals, daß der Weiterverarbeiter, der einen gattungsgemäßen Heizkörper in ein Elektrogerät, wie beispielsweise ein Warmluftgerät oder einen Fön einbaut, bei Verwendung des gleichen Heizkörpers unterschiedliche Funktionselemente, wie Lüftermotoren, einbauen will oder beispielsweise im Laufe der Zeit der einzubauende Motor wechselt. Auch kann die Abgriffstelle sich je nach verwendetem Heizleiterdraht ändern, da der Spannungsabfall von Material und Stärke abhängt. Weiterhin kann auch bei vorgegebenem Träger die Wicklungsweise unterschiedlich sein, indem verschiedene Steilheiten, gegebenenfalls über Freilassung von einzelnen Drahtaufnahmekerben, oder aber auch mehr als ein gewickelter Draht eingesetzt werden.

Bisher waren die Abgriffelemente mittels Ösen oder Nieten am Heizträgerteil an einer bestimmten Stelle festgelegt. Dabei konnte zwar gegebenenfalls der Abgriff nach Wicklung des Heizleiters am Träger angeöst werden. Es mußte aber von vornherein ein Stanzloch zur Aufnahme der Öse vorgesehen sein, womit der Ort des Abgriffs von vornherein exakt festgelegt war. Bei einem Wechsel der Stelle mußten aufwendige Veränderungen vorgenommen werden. Es konnte keine Lagerhaltung vorgesehen werden, da bei Heizkörpern mit festgelegter Position des Abgriffteils bei einer Notwendigkeit der Änderung der Position die entsprechenden gelagerten Heizkörper nicht mehr verwendbar gewesen wären. Es wurde schon in nicht gattungsgemäßer Weise vorgeschlagen, auf die von Heizleiterwindungen umgriffenen Kanten der Tragteile klemmende Abgriffelemente aufzustecken. Eine solche Ausgestaltung ist nur bei heizregisterartig ausgebildeten Heizkörpern möglich, bei denen außer den innerhalb des durch die Windungen gegebenen Bereichs zusätzliche außen liegende Trag- und Isolierplatten vorgesehen sind, zu denen die Abgriffkabel geführt und auf denen letztere befestigt und entlang geführt werden können. Darüber hinaus müssen die in sich mäanderförmig geführten Heizleiter die Tragteile über eine beträchtliche Länge bei geringer Stärke derselben übergreifende Mäanderwindungen mit dementsprechend großer Tiefe aber geringem Abstand der beiden Schenkel der Mäanderwindungen haben, was gegebenenfalls zu andersartigen Problemen führen kann, insbesondere nicht den Einsatz beliebiger, sondern nur bestimmter Tragarten und -materialien bedingt. Auch ist die Befestigung der Abgriffe lediglich klemmend oder schnappend und damit nicht für alle Einsatz- und Anwendungsgebiete geeignet, wenn auch diese bekannte Ausgestaltung für bestimmte Zwecke äußerst zufriedenstellend ist.

Es ist weiterhin schon bekannt geworden, auf einen Heizleiterträger in Form eines Hohlzylinders, auf dessen äußerem Mantel Isolierstoffplatten sternförmig angeordnet sind, über deren äußeren Kanten dann der Heizleiterdraht geführt ist, zusätzlich auf der Außenseite des Mantels Nuten durch sich parallel vom Zylindermantel erstreckende Seitenwände vorzusehen, in die eine mit an ihren Längsseiten mit Zähnung versehene Schiene einsetzbar ist, deren abgebogener Flansch als Abgriffelement ausgebildet ist. Die Schiene selbst besteht aus leitendem Material. Diese Ausgestaltung ermöglicht zwar auch eine nachträgliche Festlegung des Abgrifffortes aber nicht beliebig, und darüber hinaus nur in aufwendiger Weise. So muß, damit der Heizkörper selbst nicht überragt wird, gegebenenfalls das dem Abgriff abgewandte Ende der Schiene abgeschnitten werden. Auch ist die Ausgestaltung des Hohlzylinders und des Abgriffelementes selbst aufwendig, letzteres ist mit erheblichem Materialverbrauch verbunden. Eine Ausgestaltung mit der Aufnahme der Nut ist bei preiswerten ebenen Heizleiterträgern aus Klemmermaterial oder dergleichen überhaupt nicht möglich.

Der Erfindung liegt daher die Aufgabe zugrunde, einen gattungsgemäßen Heizkörper zu schaffen, der auf Vorrat herstellbar ist und bequem und ohne großen Aufwand hinsichtlich unterschiedlicher mit ihm einzusetzender Funktionsteile, wie Lüftermotoren, anpaßbar ist.

Erfindungsgemäß wird die genannte Aufgabe bei einem elektrischen Heizkörper mit isolierenden Tragteilen und von diesen getragenen Heizleitern und mit mindestens einem Abgriffteil zum Abgreifen einer gegenüber der am Heizleiter anliegenden Spannung verminderten Spannung, beispielsweise für einen Lüftermotor oder dergleichen der gattungsgemäßen Art dadurch gelöst, daß die Tragteile Schlitze aufweisen, durch die Füße eines Abgriffteils hindurchgreifen, mittels derer das Abgriffteil am Tragteil festgelegt ist, wobei die Länge der Schlitze größer als die Breite der Füße des Abriffteils ist. Durch die erfindungsgemäße Ausgestaltung ist es möglich, daß das Abgriffteil innerhalb der Tragteile entlang der Schlitze verschoben wird und daher die Position des Abgriffteils auch relativ zu den Windungen und damit dem Spannungsabfall entlang der Windungen verändert werden kann. Es können daher je nach Stellung des Abgriffteils im Schlitz unterschiedliche Spannungen an dem Heizleiter abgegriffen werden. Die abgegriffene Spannung kann daher an das verwendete Funktionsteil, wie ein Lüftermotor, angepaßt werden.

Durch die Erfindung wird es möglich mit einem Stanzwerkzeug Trägerplatten auszustanzen, die dann für verschiedene oben angedeutete Einsatzmöglichkeiten vorgesehen werden können, bei denen insbesondere der Abgriff in Abhängigkeit von unterschiedlichen Notwendigkeiten nachträglich eingesetzt und an unterschiedlichen Stellen festgelegt und damit an einer gewünschten von mehreren möglichen Windungen angreifen kann.

In bevorzugter Ausgestaltung ist vorgesehen, daß durch zwei zueinander parallel verlaufende Schlitze zwei Füße greifen, die aufeinander zugebogen sind. Hierdurch wird ein sicherer Halt des Abgriffteils am Tragteil geschaffen. Bei Heizkörpern mit im wesentlichen zylindrischer Außenkontur verlaufen die Schlitze regelmäßig parallel zur Achse des Heizkörpers. Die gleiche Ausrichtung kann auch bei Heizkörpern mit konischer Kontur gewählt werden. In diesem Falle wird ein Verbindungsabschnitt des Abgriffteils vom Fuß- und Befestigungsbereich desselben am Tragteil zu den mit dem Heizleiter zu verpressenden Abgriffbereich, der im allgemeinen mit einer offenen, U-förmigen Abgriffhülse ausgebildet ist, derart gewählt, daß er den größten möglichen Abstand zwischen Tragteil und Heizleiter übergreifen kann. Wenn eine Verschiebung in Bereiche erforderlich ist, in denen aufgrund der konischen Kontur der Heizleiter näher zum Tragteil gelangt, so kann der Verbindungsabschnitt mit einer Abknickung verseher werden, so daß seine Gesamthöhe verkleinert und angepaßt wird. Alternativ hierzu kann vorgesehen sein, daß bei Heizleiterführung mit konischer Kontur die Schlitze derart verlaufen, daß die Senkrechte von den Schlitzen zum Heizleiter entlang der Schlitze im wesentlichen gleich ist.

Während bisher Abgriffteile zumindest insofern zweiteilig ausgebildet waren, als zu ihm gehörende Ösen zur Befestigung am Tragteil erforderlich waren, sieht die Erfindung vor, daß das Abgriffteil vollständig einstückig ausgebildet ist.

Weitere Vorteile und Merkmale der Erfindung ergeben sich aus den Ansprüchen und aus der nachfolgenden Beschreibung, in der ein Ausführungsbeispiel des erfindungsgemäßen Heizkörpers unter Bezugnahme auf die Zeichnung im einzelnen erläutert ist. Dabei zeigt:

Fig. 1    in Seitenansicht entsprechend I-II der Figur 2;

Fig. 2    eine Aufsicht auf den Heizkörper entsprechend II-II der Figur 1;

Fig. 3    eine Sicht ähnlich der der Figur 1 auf ein einzelnes Abgriffteil in Richtung der Pfeile III der Figuren 4 und 5;

Fig. 4    eine Sicht in Richtung der Pfeile IV der Figuren 3 un 5; und

Fig. 5    eine Aufsicht auf das Abgriffteil in Richtung der Pfeile V der Figuren 3 und 4.

Der erfindungsgemäße Heizkörper 1 weist ein Tragteil 2, 3 mit entlang ihrer Längsachse ausgebildeten, einseitig offenen Teilschlitzen ausgebildeten, axial ineinander gesteckten Tragplatten 3 aus Isoliermaterial, wie Glimmer, insbesondere in Form von Mikaniten. Die ineinander gesteckten Trägerplatten 3 bilden so ein Tragteil 2 in Form eines Tragsternes. An den seitlichen Rändern sind in den Trägerplatten 3 Zähnungen 4 ausgebildet. Gegebenenfalls könnte noch eine Tragplatte 3 entsprechend der DE-OS 27 22 213 vorgesehen sein.

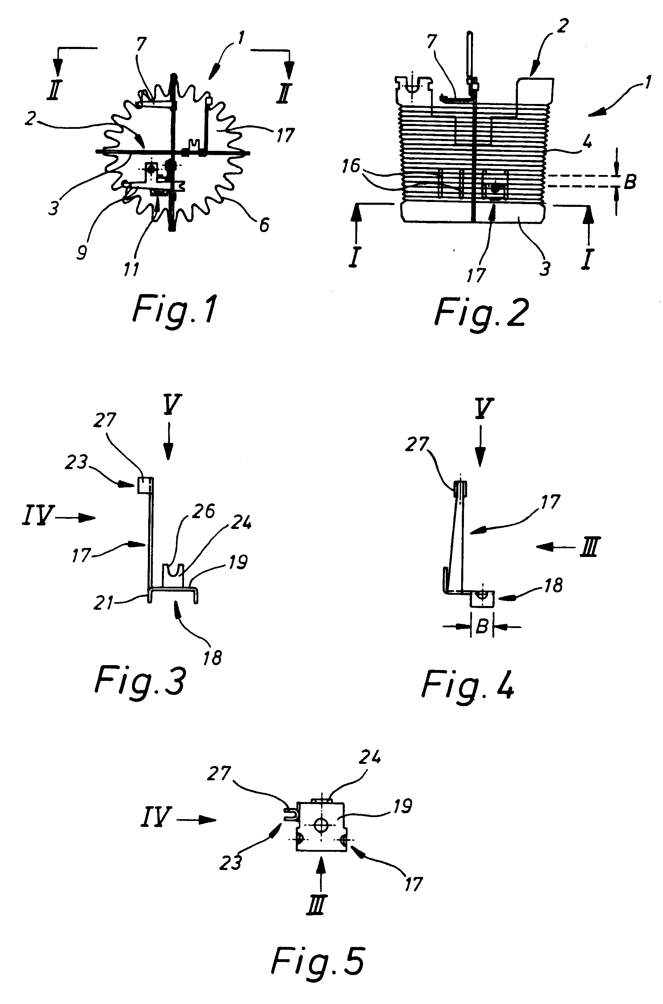

In das Tragteil 3 ist ein Heizleiter 6 in Form eines Isolierdrahtes herumgewickelt, der durch die Vertiefungen der Zähnungen 4 geführt ist und in diesen gehalten wird. Zwischen den Kanten der Tragplatten 3 ist der Heizleiter 6 im wesentlichen selbsttragend, indem er beispielsweise wellförmig ausgebildet ist, wie dies in der Figur 1 entnehmbar ist. Hierdurch stabilisiert er sich in den Bereich, in den er frei zwischen Tragplatten 3 gespannt ist selbst.

An einem Ende des Heizleiters 6 greift ein Anschlußelement 7 am Heizleiter 6 an, indem es mit diesem verpreßt ist. Das Anschlußelement 7 ist auf einer Tragplatte 3 befestigt und mit einem Anschlußkabel (Figur 2) versehen. Am anderen Ende des Heizleiters greift ein entsprechendes Anschlußteil 9 an diesem an, ist aber nicht direkt mit einem Anschlußkabel verbunden, sondern über einen mit einer Bimetallscheibe versehenen Temperaturschalter 11.

Derartig ausgebildete Heizkörper dienen nun in der Regel auch als Vorwiderstände für Funktionselemente des Geräts, in dem sie eingebaut ist, wie für Lüftermotoren bei Warmluftgeräten, z.B. Fönen oder dergleichen, da die Funktionselemente nicht mit der voll zur Verfügung stehenden Netzspannung beaufschlagt werden können, die beispielsweise am Heizkörper anliegt und über diesem abfällt. Es ist daher schon bekannt, an Zwischenstellen des Heizleiters einen Spannungsabgriff vorzusehen, von dem ein Anschluß eines Funktionselements, wie eines Motors gespeist wird.

Der erfindungsgemäße Heizkörper weist nun in der dargestellten Ausführungsform weitgehend achsparallel verlaufende Schlitze 16 auf. Die Schlitze 16 dienen zur Aufnahme und Festlegung eines Spannungs-Abgriffteils 17 in der weiter unten beschriebenen Weise. Das Abgriffteil 17 weist einen im Schnitt U-förmiges Fußteil 18 mit einem U-Steg 19 und sich von diesem nach einer Seite hin parallel zueinander erstreckenden Befestigungs-Füßen 21 auf. Vom Fußteil 18 erstreckt sich in entgegensetzter Richtung zu den Befestigungs-Füßen 21, mit einem derselben fluchtend ein Verbindungsabschnitt 21 des Abgriffteils 17, an dessen der Fußteil 19 abgewandten Ende eine im Schnitt U-förmige, offene Befestigungshülse 23 ausgebildet ist. Weiterhin ist im Fußteil 19 eine Anschlußfahne 24 mit einer Schneide 26 zum Anschluß eines Verbindungskabels vorgesehen. Die Schneide 26 hält das Anschlußende des Verbindungskabels beispielsweise beim Festlöten desselben.

Der Abstand der Füße 21 entspricht dem Abstand der Schlitze 16. Die Breite B (Figur 4) der Füße 21 ist geringer als die Länge der Schlitze 16, im dargestellten Ausführungsbeispiel (Figur 2) beträgt die Breite B der Füße 21 lediglich etwa 1/3 der Länge der Schlitze 16, die sich bei einer Gesamtwindungszahl von etwa 22 über den Abstand von etwa 7 Windungen, also einem Drittel der Windungszahl erstrecken. Das Abgriffteil 17 kann daher an etwa 4 Windungen angreifen, je nachdem welche Position es entlang der Schlitze 16 einnimmt.

Die Länge der Schlitze 16 erstreckt sich vorzugsweise über einen Abstand von etwa 1/4 bis der Hälfte der Gesamtzahl der Windungen eines Heizkörpers und die Breite B der Füße 21 beträgt etwa ebenfalls 1/5 bis 1/2 der Gesamtlänge der Schlitze 16. Hierdurch kann ein hinreichender Spannungsbereich bei verschiedensten Einsatzmöglichkeiten und Funktionselementen, wie Lüftermotoren, überstrichen werden, insbesondere unter Berücksichtigung der Wahl eines der beiden Endanschlüsse 8 des Heizkörpers als weiterer Anschluß des Funktionselements neben dem Anschluß am Abgriffteils 17.

Die Befestigung des Abgriffteils 17 nach Einstellung der gewünschten Abgriffposition erfolgt dadurch, daß einerseits die Klappen 27 der Abgriffhülse 23 mit dem Heizleiter 6 verpreßt werden, und andererseits die durch die Schlitze 16 greifenden Füße 21 abgebogen und gegen das Tragteil 2 gedrückt werden, so daß sie an diesen zusammen mit dem Fuß-Steg 19 verspannt sind.

## Patentansprüche

1. Elektrischer Heizkörper mit isolierenden Tragteilen und von diesen getragenen Heizleitern und mit mindestens einem Abgriffteil zum Abgreifen einer Zwischenspannung, beispielsweise für einen Lüftermotor oder dergleichen, dadurch gekennzeichnet, daß die Tragteile (2, 3) Schlitze (16) aufweisen, durch welche Füße (21) eines Abgriffteils (17) hindurchgreifen, mittels derer das Abgriffteil (17) am Tragteil (2, 3) festgelegt ist, wobei die Länge der Schlitze (16) größer als die Breite (B) der Füße (21) des Abgriffteils (17) ist.

2. Heizkörper nach Anspruch 1, dadurch gekennzeichnet, daß durch zwei zueinander parallel verlaufende Schlitze (16) zwei Füße (21) greifen, die aufeinander zu gebogen sind.

3. Heizkörper nach Anspruch 1 oder 2, dadurch gekennzeichnet, daß die Schlitze (16) parallel zu einer Längsachse des Heizkörpers (1) verlaufen.

4. Heizkörper nach Anspruch 1 oder 2, dadurch gekennzeichnet, daß bei Heizleiterführung mit konischer Kontur die Schlitze (16) derart verlaufen, daß die Senkrechte von den Schlitzen (16) zum Heizleiter (6) entlang der Schlitze (16) in wesentlichen gleich ist.

5. Heizkörper nach einem der vorangehenden Ansprüche, dadurch gekennzeichnet, daß das Abgriffteil (17) vollständig einstückig ausgebildet ist.

6. Heizkörper nach einem der vorangehenden Ansprüche, dadurch gekennzeichnet, daß die Länge der Schlitze (16) ein Vielfaches des Abstandes benachbarter Windungen des Heizleiters (6) ist.

7. Heizkörper nach einem der vorangehenden Ansprüche, dadurch gekennzeichnet, daß die Schlitze (16) sich über ein Sechstel bis ein Drittel der Länge des Heizleiter-Tragteils (2, 3) erstrecken.

8. Heizkörper nach einem der vorangehenden Ansprüche, dadurch gekennzeichnet, daß die Breite der durch die Schlitze (16) greifenden Füße (21) des Abgriffteils (17) in Erstreckungsrichtung der Schlitze (16) einen Bruchteil der Länge der Schlitze (16) beträgt.

9. Heizkörper nach einem der vorangehenden Ansprüche, dadurch gekennzeichnet, daß die Schlitze (16) sich im wesentlichen quer zur Laufrichtung der einzelnen Windungen des Heizleiters (6) erstrecken.

## Claims

1. An electrical heating element having insulating supporting members, heating conductors borne thereby, and at least one tap member for tapping an intermediate voltage, for example, for a fan motor or the like, characterized in that the supporting members (2, 3) are formed with slots (16) through which feet (21) of a tap member (17) engage, by means of which the tap member (17) is secured to the supporting member (2, 3), the length of the slots (16) being grated and the width (B) of the feet (21) of the tap member (17).

2. A heating element according to claim 1, characterized in that two feet (21) which are bent towards one another engage through two slots (16) extending parallel with one another.

3. A heating element according to claims 1 or 2, characterized in that the slots (16) extend parallel with a longitudinal axis of the heating element (1).

4. A heating element according to claims 1 or 2, characterized in that with the heating conductors extending in a conical outline, the slots (16) so extend that the perpendicular from the slots (16) to the heating conductor (6) is substantially identical along the slots (16).

5. A heating element according to one of the preceding claims, characterized in that the tap member (17) is constructed completely unitary.

6. A heating element according to one of the preceding claims, characterized in that the length of the slots (16) is a multiple of the distance between adjacent turns of the heating conductor (6).

7. A heating element according to one of the preceding claims, characterized in that the slots (16) extend over one sixth to one third of the length of the heating conductor supporting member (2, 3).

8. A heating element according to one of the preceding claims, characterized in that the width of the feet (21) of the tap member (17) engaging through the slots (16) in the direction of the extension of the slots (16) is a fraction of the length thereof.

9. A heating element according to one of the preceding claims, characterized in that the slots (16) extend substantially transversely of the direction in which the individual turns of the heating conductor (6) extend.

## Revendications

1. Corps de chauffe électrique avec des supports isolants et des conducteurs chauffants portés par des supports et avec une prise qui prélève une tension intermédiaire par exemple pour un moteur d'un ventilateur ou équivalent caractérisé en ce que les supports (2, 3) ont des fentes (16) par qui des pieds (21) d'une prise (17) passent les pieds (21) fixant la prise (17) à un support (2, 3) et que la longueur des fentes (16) est plus large que la largeur (B) des pieds (21) de la prise (17).

2. Corps de chauffe selon la revendication 1 caractérisé en ce que deux pieds (21) passent à travers deux fentes (16) parallèles les pieds (21) étant courbés l'un contre l'autre.

3. Corps de chauffe selon la revendication 1 ou 2 caractérisé en ce que les fentes (16) s'étendent parallèles à un axe longitudinal du corps de chauffe (1).

4. Corps de chauffe selon la revendication 1 ou 2 caractérisé en ce qu'en cas d'un contour extérieur conique du conducteur chauffant (6) les fentes (16) s'étendent de telle façon que la perpendiculaire entre les fentes (16) et le conducteur chauffant (6) est essentiellement la même le long de la fente (16).

5. Corps de chauffe selon une des revendications précédentes caractérisé en ce que la prise (17) est complètement formée d'une seule pièce.

6. Corps de chauffe selon une des revendications précédentes caractérisé en ce que la largeur des fentes (16) est un multiple de l'intervalle entre les spires du conducteur chauffant (6).

7. Corps de chauffe selon une des revendications précédentes caractérisé en ce que les fentes (16) s'étendent d'un sixième jusqu'à un tiers de la longueur du support (2, 3) du conducteur de chauffage (6).

8. Corps de chauffe selon une des revendications précédentes caractérisé en ce que la largeur (B) des pieds (21) fixès dans les fentes (16) dans le sens des fentes (16) est égale à une fraction des longueurs des fentes (16) .

9. Corps de chauffe selon une des revendications précédentes caractérisé en ce que les fentes (16) s'étendent pour l'essentiel perpendiculairement au sens de l'extension des spires du conducteur chauffant (6).

Fig.1

Fig.2

Fig.3

Fig.4

Fig.5